# EUROPEAN PATENT APPLICATION

(11) **EP 4 432 246 A1**
(43) Date of publication of application: **18.09.2024**
(21) Application number: 23162346.3
(22) Date of filing: 16.03.2023
(51) Int. Cl.: G06V 10/22

(54) **IDENTIFYING AN ANATOMICAL OBJECT IN A MEDICAL IMAGE**

(71) Applicant: Koninklijke Philips N.V., 5656 AG Eindhoven (NL)
(72) Inventor: CANFIELD II, Earl Monroe, Eindhoven (NL); LORENZ, Cristian, Eindhoven (NL); DICKERSON, Matthew, 5656AG Eindhoven (NL)
(74) Representative: Philips Intellectual Property & Standards

(57) **Abstract**

A method and system for performing anatomical object identification on a medical image. Location information, providing information about a location of a measurement of an anatomical object in the medical image, is received (410) and processed (420) to produce anatomical object information. The anatomical object information identifies the anatomical object in a form that can be used to train a machine-learning model.

## Description

### FIELD OF THE INVENTION

The present invention relates to the field of medical image processing, and in particular to identifying an anatomical object in a medical image.

### BACKGROUND OF THE INVENTION

There is an ongoing desire to perform accurate automated identification of anatomical objects medical images, e.g., to automatically identify clinically relevant regions of the medical image. Recently, machine-learning models have been exploited to perform this automated identification. Such algorithms have a distinct advantage over traditional forms of computer programming techniques in that they can be generalized and trained to recognize image features, rather than writing custom computer code.

However, one recognized disadvantage of machine-learning models is that they typically require a large amount of training data in order to perform their task accurately and robustly. For objection recognition tasks, this places a significant burden on clinicians to accurately and repeatedly produce different examples of training data.

There is therefore a desire to produce training data for training a machine-learning model to perform an object recognition task. More particularly, there is an increasing desire to reduce a burden on clinicians for manually performing object recognition on medical images for producing such training data.

### SUMMARY OF THE INVENTION

The invention is defined by the independent claims. The dependent claims define advantageous embodiments.

According to examples in accordance with an aspect of the invention, there is provided a computer-implemented method for performing anatomical object identification on a medical image, the computer-implemented method comprising: receiving location information identifying, with respect to the medical image, one or more measurement locations, wherein each measurement location represents a location defined by a clinician during a geometric measurement procedure using the medical image; and processing the location information to produce anatomical object information that identifies a region containing and/or bounding the anatomical object.

The present disclosure recognizes that it is common for clinicians, during the course of a standard or conventional medical analysis of a patient/subject, to perform a geometric measurement procedure in which one or more geometric measurements of an anatomical object are captured. A geometric measurement, also known as a geometrical measure, is any measurement of a dimension or distance-based parameter, e.g., a distance, length, width, diameter, radius, circumference, perimeter, area or volume. Other examples are well known to the skilled person.

Geometric measurement procedures typically comprise the clinician identifying measurements locations (e.g., at least one or more start and end locations) for a measurement on a medical image, and performing one or more measurements using this point or these points to determine the measurement. This is particularly common, for instance, in fetal monitoring (e.g., to identify fetal head circumference, fetal bladder size or fetal abdomen size), but is also performed in other medical monitoring procedures, e.g., to identify the size of a tumor or growth, the length of the spine, the length of a bone and so on.

It has been herein recognized that these measurement locations can effectively represent locations identifying the anatomical object, e.g., locations on the bounds of the (investigated) anatomical object. It is proposed to exploit this understanding to automatically segment, or perform object identification of, the medical image using the measurement locations. In particular, a bounding box or contour can be positioned to intersect or contain the measurement locations.

The proposed technique can be used to produce training data suitable for training a machine-learning model to perform a task of image segmentation or object identification of medical images. These procedures have a technical purpose, as they relate to the identification of an object represented by an image. The proposed technique improves the available training dataset or training data by providing additional example, making any subsequently trained machine-learning model more robust, insensitive to variations and/or accurate.

In some embodiments, the one or more measurement locations comprise two or more measurement endpoints; and each measurement endpoint represents a start location or an end location of a measurement of an anatomical object taken by a clinician during a geometric measurement procedure using the medical image.

An endpoint can be assumed to identify the bounds of an anatomical object, thereby facilitating increased ease and accuracy in correctly identifying or segmenting for the bounds of the anatomical object.

In some examples, the one or more measurement locations comprise: a first set of measurement locations that represent a first start location and a first end location for a geometric measurement taken across a first dimension of the anatomical object; and a second set of measurement locations that represent a second start location and a second end location for a geometric measurement taken across a second, different dimension of the anatomical object.

In some examples, the first dimension is substantially perpendicular to the second dimension.

In some examples, one of a width or height of the region is defined by the distance between the first start location and the first end location; and the other of the width or height of the region is defined by the distance between the second start location and the second end location.

In some examples, the step of processing the location information comprises identifying, as the region, a contour or bounding box that intersects the location of each measurement location identified in the location information.

This technique provides a simple but effective mechanism for performing image segmentation or object identification.

In an alternative example, the step of processing the medical image and the location information may comprise identifying, as the region, a contour or bounding box that contains the location of each measurement location identified in the location information.

In some examples, each measurement location represents a location of a jaw of a virtual caliper used to determine a measurement of the anatomical object by the clinician during the geometric measurement procedure.

In some examples, each measurement location is manually defined by the clinician during the geometric measurement procedure.

This approach ensures that the clinician defines the location of the measurement locations, such that the accuracy of the object identification would be similar to that if the clinician performed the full object identification themselves.

In some examples, the step of receiving location information comprises receiving a medical report associated with the medical image, the medical report comprising the location information.

Medical reports are more likely to contain accurate location information. Thus, by using data contained in a medical report for the medical image, more accurate object identification can be performed.

In some examples, the medical report comprises a structured medical report, and is preferably a DICOM encoded report.

Use of a structured medical report increases the ease and reliability of identifying location information contained therein (as it will be at a predictable location or formatted in a predictable manner). A structured medical report is also less likely to contain erroneous data that other forms of medical report, as such structured medical reports require data to be input in a predefined manner. Use of a structured medical report thereby increases the accuracy and reliability of object identification using location information.

In some examples, the medical report further comprises measurement information identifying the measurements produced during the geometric measurement procedure.

There is also proposed computer-implemented method of performing anatomical object identification on medical images comprising, for each medical image, performing the method described above.

Preferably, the location information of each medical image is previously obtained, e.g., has been previously produced and stored in a memory or storage unit. This recognizes that the proposed method can be performed on old. historic and recently made available data in order to improve the amount of data available for training a machine-learning model.

In some examples, for each medical image, the step of receiving location information comprises: receiving a medical report associated with the medical image, the medical report comprising the location information and measurement information identifying the measurements produced during the geometric measurement procedure.

This embodiment takes advantage of the recognition that medical reports that contain measurement information are likely to have highly or sufficiently accurate identification of the measurement locations. In other words, the location information contained in such medical reports is considered reliable, since they correspond to precise measurements used in the report, i.e., these images have already been annotated by the clinician.

This approach ensures that the reliability of the anatomical object identification is similar or equal to approaches in which the anatomical object identification is directly performed by a clinician.

In some examples, the method further comprises: adding each medical image and anatomical object information to a training dataset for training a machine-learning model to perform anatomical object identification to produce an updated training dataset; and subsequently training or retraining the machine-learning model using the updated training dataset.

According to another aspect of the invention, there is provided a computer program product comprising computer program code which, when executed by a processor, causes the processor to perform the steps of the method described above.

According to yet another aspect of the invention, there is provided a processing system for performing anatomical object identification on a medical image, the processing system being configured to perform the steps of any method described or claimed herein.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a system for performing anatomical object identification on a medical image, according to an embodiment of the invention;
Fig. 2 illustrates a fetal ultrasound image with caliper positions for a fetal head circumference measurement;
Fig. 3 illustrates the same fetal ultrasound image of Fig. 2 with a bounding box bounding the fetal head;
Fig. 4 illustrates a computer-implemented method for performing anatomical object identification on a medical image, according to an embodiment of the invention; and
Fig. 5 illustrates a computer-implemented method for performing anatomical object identification on medical images, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for performing anatomical object identification on a medical image. Location information, providing information about a location of a measurement of an anatomical object in the medical image, is received and processed to produce anatomical object information. The anatomical object information identifies the anatomical object in a form that can be used to train a machine-learning model.

Embodiments are at least partly based on the realization that geometric measurements or geometrical measures taken during the course of a clinician's work provide medical images that have already been annotated by clinical specialists. By converting the measurement data into data that can be used in training a machine-learning model to perform object identification, an accurate training dataset may be produced without requiring additional clinician time.

Illustrative embodiments may, for example, be employed using medical imaging systems that measure anatomical objects for monitoring or diagnosis, such as ultrasound systems, MRI systems, CT systems and X-ray systems.

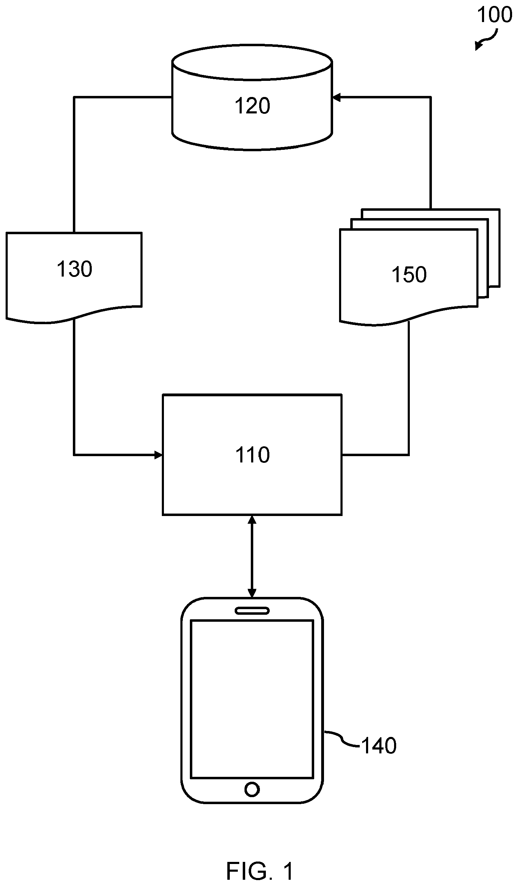

Fig. 1 illustrates a system 100 for performing anatomical object identification on a medical image, according to an embodiment of the invention.

The medical image may be any image from which a (geometric) measurement of an anatomical object is taken by a clinician, for example, for monitoring or diagnostic purposes. For instance, the medical image may be an ultrasound image (e.g., a fetal ultrasound image, an echocardiogram or a vascular ultrasound image), a magnetic resonance (MR) image, a computed tomography (CT) image or an X-ray image.

The medical image may be a 2D medical image or a 3D medical image.

The system 100 comprises a processing system or processor 110 and a memory unit 120. The processing system or processor is, itself, an embodiment of the invention. Processing system and processor may be used interchangeably throughout this specification.

The processing system 110 is configured to receive location information 130 identifying the location of one or more measurement locations with respect to the medical image. Each measurement location represents location defined or identified taken by a clinician during a geometric measurement procedure.

The measurement location may identify, for a 2D medical image, a location of a pixel of the 2D medical image. Similarly, for a 3D medical image, the measurement location may identify a location of a voxel of the 3D medical image.

It is, of course, possible that each measurement location is identified by more than one clinician during a geometric measurement procedure, e.g., by a team of clinicians or a supervisor-trainee pair of clinicians. Alternatively, each measurement location may be identified by a single suitably experienced or trained clinician.

One example of a measurement location is a measurement endpoint, which represents the start or end location of a measurement taken by a clinician during a geometric measurement procedure.

In advantageous embodiments, the one or more measurement locations comprises two or more measurement endpoints, each representing a start or end location of a measurement of an anatomical object. In other words, the location information may comprise the location of at least one set of locations, each set containing a start location and an end location, such that the distance between the locations in each set corresponds to a measurement taken during the geometric measurement procedure.

In examples, each measurement location may represent a location of a jaw of a virtual caliper used to determine a measurement of the anatomical object by the clinician during the geometric measurement procedure.

The use of virtual calipers for determining measurements of anatomical objects in medical images is well known, and virtual calipers are widely used in medical imaging systems. Virtual calipers may be manually placed by a clinician or automatically positioned. Applications that automatically position calipers on a medical image during a geometric measurement procedure usually allow a user to manually correct the automated position.

The locations of the jaws of a virtual caliper are generally saved alongside the medical imaging data when a virtual caliper is used to determine a measurement from a medical image. For instance, a DICOM encoded report for a medical imaging examination will typically contain the measurements taken, and the calculations and caliper positions used to take the measurements, along with the medical image(s) from which the measurements were taken. The processing system 110 may therefore perform anatomical object identification on historical images (i.e., images for which the geometric measurement procedure has concluded), as well as during geometric measurement procedures.

An alternative example of a measurement location is a location that identifies an elongate structure (e.g., a spine or bone), e.g., the centerline of an elongate structure. In some geometric measurement procedures, a clinician is able to identify a plurality of locations that identify the path taken by such an elongate structure to measure the elongate structure. These locations are suitable for acting as a measurement location.

The processing system 110 may receive the location information 130 from the memory unit 120. The memory unit may, for example, form part of a Picture Archiving and Communication System (PACS), an Electronic Medical Record (EMR) system, a Clinical Information System (CIS), a Radiology Information System (RIS), a Cardiovascular Information System (CVIS), or any other system that stores clinical data relating to medical imaging.

Alternatively, the location information may be obtained by the processing system via a user input (e.g., the processing system may receive each measurement location for a measurement as the measurement is taken during the geometric measurement procedure).

In some examples, the processing system may receive the location information 130 by receiving a medical report, associated with the medical image, that comprises the location information. The medical report may be anonymized using any suitable anonymization/de-identification method, in order to protect patient anonymity. This technique allows for the processing of historic information, which was previously not available for use in training a machine-learning model for object identification.

The medical report may comprise a structured medical report, i.e. a medical report in which the location information is stored at a predictable location and/or formatted in a predictable manner. This approach increases an ease and reliability of correctly identifying the location information in the medical report. Preferably, the medical report comprises a DICOM (Digital Imaging and Communications in Medicine) report. These have a set and restricted format from which information or data can be readily and reliably extracted.

In some examples, the medical report further comprises measurement information identifying the or any measurement(s) produced during the geometric measurement procedure. In other words, the location information is associated with measurement information identifying which anatomical object the measurement corresponds to, and preferably identifying the type of measurement of the anatomical object (e.g., fetal head circumference, biparietal diameter, occipitofrontal diameter, abdominal circumference, femur length, etc.).

Having received the location information 130, the processing system 110 processes the location information to produce anatomical object information that identifies a region containing and/or bounding the anatomical object.

Various approaches may be used to produce anatomical object information that identifies a region containing and/or bounding the anatomical object. It will be appreciated that the precise mechanism that is used to identify the region may be at least partly dependent upon the type or identity of the anatomical object to be identified (e.g., the anatomical object that was measured).

As a first example, a measurement location may represent a start/end location of a measurement of a first anatomical object. The measurement location may represent a location of a second anatomical object, which can be used to define the anatomical object information. For instance, a geometric measurement of the tibia may begin at the knee and end at the ankle. In this scenario, the start location of the measurement identifies the location of the knee. A bounding box containing the start location may therefore represent a bounding box identifying the location of the knee. As another example, a geometric measurement of the spine may begin at the base of the spine and extend to the head. In this scenario, the start location of the measurement may identify the location of the base of the spine.

In these examples, the bounding box may, for instance, have a predetermined size and/or shape. In some examples, the size of the bounding box is defined by the length of the geometric measurement, e.g., to perform scaling of the bounding box to match the scale of the geometric measurement.

This first example provides an example scenario in which a single measurement location can be used to produce anatomical object information identifying the location of an anatomical object. Other approaches make use of a plurality of measurement locations in order to produce the anatomical object information.

As another example, a region bounding the anatomical object may be identified by defining, as the region, a contour or bounding box that intersects the location of each measurement location identified in the location information 130. This approach is particularly useful if the geometric measurement procedure is performed by identifying locations on the bounds of the object, e.g., as in common when performing a geometric measurement of the heart, lungs, fetal head, fetal bladder and so on.

A region containing the anatomical object may be identified by defining, as the region, a contour or bounding box that contains the location of each measurement location identified in the location information. This approach is particularly useful if, for instance, the geometric measurement procedure is for measuring the length of an object along its centerline. This technique is also useful if the geometric measurement is known to be less reliable, e.g., a geometric measurement taken during early fetal growth or without the aid of a contrast agent.

These approaches provide techniques for producing anatomical objection information identifying the location of the measured anatomical object.

The size of a region that contains, but does not intersect, the location of each measurement location may be defined by adding a predetermined margin around a region that intersects each measurement location. The predetermined margin may, for example, comprise an absolute value (e.g., a predetermined number of pixels), or may be defined in terms of a percentage of a distance between measurement locations. In some examples, the size of the predetermined margin may be different for different dimensions of the region.

In some examples, the one or more measurement locations may comprise a first set of measurement locations, representing a first start location and a first end location for a measurement taken across a first dimension of the anatomical object, and a second set of measurement locations, representing a second start location and a second end location for a measurement taken across a second, different dimension of the anatomical object. The first dimension may be substantially perpendicular to the second dimension.

Where the one or more measurement locations comprise a first and second set of measurement locations, one of a width or height of the region may be defined by the distance between the first start location and the first end location of the first set of locations, and the other of the width or height of the region may be defined by the distance between the second start location and the second end location of the second set of locations.

In other words, the distance between the first start location and the first end location and the distance between the second start location and the second end location may together define the width and height of the region containing and/or bounding the anatomical object. In some examples, a predetermined margin may be added to the distance between each set of locations to define the width and/or height of the region.

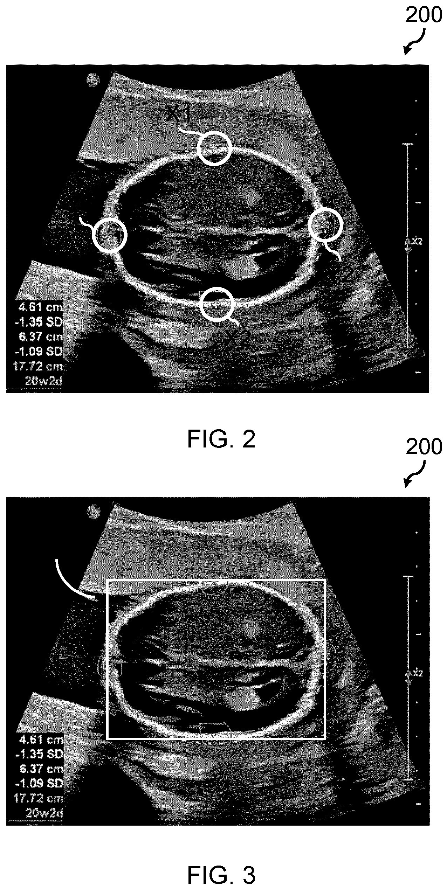

This concept is illustrated by Figs. 2 and 3. Fig. 2 shows a fetal ultrasound image 200 with caliper positions for a fetal head circumference measurement. X1 and X2 mark the positions of a first start location and a first end location respectively, forming a first set of measurement locations. Y1 and Y2 mark the positions of a second start location and a second end location respectively, forming a second set of measurement locations.

Fig. 3 illustrates the same fetal ultrasound image 300 with a bounding box 300 bounding the fetal head. The height of the bounding box is defined as the distance between locations X1 and X2, while the width of the bounding box is defined as the distance between the locations Y1 and Y2. In this way, the bounding box intersects the measurement locations X1, X2, Y1 and Y2.

While Fig. 3 shows a rectangular bounding box, the skilled person will appreciate that the region containing and/or bounding the anatomical object may be defined by a contour having a different shape, e.g., an ellipsis, a circle or any other suitable shape.

Returning to Fig. 1, the system 100 may further comprise a user interface 140 in communication with the processing system 110. The user interface may, in some cases, such as where the processing system performs anatomical object identification during the geometric measurement procedure, comprise a user interface of a medical imaging system used to carry out the geometric measurement procedure.

The user interface 140 may receive user inputs that allow a user of the system 100 to adjust settings of the anatomical object identification to meet their requirements, and the processing system 110 may control these settings based on a received user input. For instance, a user input may define a size of the contour or bounding box (e.g., whether the region contains or bounds the anatomical object), or a size of the margin around the measurement locations. The output format (e.g., json, txt, xml, etc.) of the anatomical object information produced by the system may also be defined by user input, in order to allow the output data to meet the requirements of various AI vendors.

In some examples, the processing system 110 may perform anatomical object identification as described above for each of a plurality of medical images. In this way, anatomical object information may be generated for a plurality of medical images.

For the avoidance of doubt, it is noted that the location information used for each of the plurality of medical images need not be produced by a same clinician during a same geometric measurement procedure. Rather, each instance of location information is able to represent location information produced by different clinicians and/or in difference geometric measurement procedures, reflecting the occasion when the relevant medical image underwent a geometric measurement procedure.

The processing system may then add each medical image and the anatomical object information produced for each image to a training dataset for training a machine-learning model to perform anatomical object identification (e.g., a segmentation model or an automated measurement model). This produces an updated training dataset without requiring additional clinician time to annotate the images being added to the training dataset. The machine-learning model may then be trained or retrained using the updated training dataset.

A machine-learning model is trained using a self-training algorithm that processes input data in order to produce or predict output data.

Here, the input data may comprise one or more medical images and the output data comprises anatomical object information for the one or more medical images (e.g., segmentation information and/or an anatomical measurement).

Suitable machine-learning models for being employed in the present invention will be apparent to the skilled person. Examples of suitable machine-learning models include decision tree algorithms and artificial neural networks. Other machine-learning models such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g., the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning model are well known. Typically, such methods comprise obtaining a training dataset, comprising training input data entries and corresponding training output data entries. An initialized machine-learning model is applied to each input data entry to generate predicted output data entries. An error between the predicted output data entries and corresponding training output data entries is used to modify the machine-learning model. This process can be repeated until the error converges, and the predicted output data entries are sufficiently similar (e.g., ±1%, ±5%, ±10%) to the training output data entries. This is commonly known as a supervised learning technique.

For example, where the machine-learning model is formed from a neural network, (weightings of) the mathematical operation of each neuron may be modified until the error converges. Known methods of modifying a neural network include gradient descent, backpropagation algorithms and so on.

In one example, the training input data entries correspond to the medical images added to the training dataset and the training output data entries correspond to the anatomical object information produced for each image. This provides a technique for performing object identification in a single image.

In another example, the training input data entries correspond to sets of medical images added to the training dataset, and the training output data entries correspond to corresponding sets of anatomical object information produced for each set of medical images. Each set of medical images may be a sequence of time-order medical images of a same subject (e.g., medical images reviewed by a same clinician during a single geometric measurement procedure). This approach can allow, for instance, the machine-learning model to be trained to identify or track an object across a plurality of images, e.g., a sequence of images.

In some examples, all of the plurality of medical images (e.g., all medical images in a particular database) and corresponding anatomical object information may be added to the training dataset.

In other examples, only a subset of the plurality of medical images and corresponding anatomical object information may have anatomical object identification performed on them and/or be added to the training dataset. In other words, the plurality of medical images and corresponding anatomical object information may be filtered before performing anatomical object identification and/or before being added to the training dataset, for example to provide a specialized training dataset for a particular purpose or to ensure that the training dataset meets one or more predetermined requirements.

For instance, the subset of the plurality of medical images may consist of medical images of a particular anatomical object (e.g., a fetal head), or medical images for which a particular measurement has been taken (e.g., a fetal head circumference measurement). In some examples, a desired anatomical object or measurement for selecting the subset of the plurality of medical images may be determined via a user input.

In another example, the subset of the plurality of medical images may consist of medical images for which patient consent for use as training data has been obtained. In yet another example, the subset of the plurality of medical images may consist of medical images for which automatically placed calipers have been manually corrected by a clinician, as this improves a likelihood of an accuracy of the caliper position.

In some examples, all available medical images may be used to train the machine-learning model initially, and a subset of medical images produced after training may be used to retrain the model. For instance, if the machine-learning model is a model for the automatic placement of virtual calipers, or a model for the automated measurement of an anatomical object in a medical image, outputs of the trained model may be corrected by a clinician. Images for which the model output has been corrected may then be used to retrain and improve the model, by performing anatomical object identification based on the corrected measurement locations.

Having produced the updated training set, the processing system 110 may store the updated training set in the memory unit 120 and/or export the updated training set (e.g., to a cloud-based storage system). In some examples, the processing system 110 may automatically store the updated training set. In other examples, a user input may define when and where the updated training set is stored.

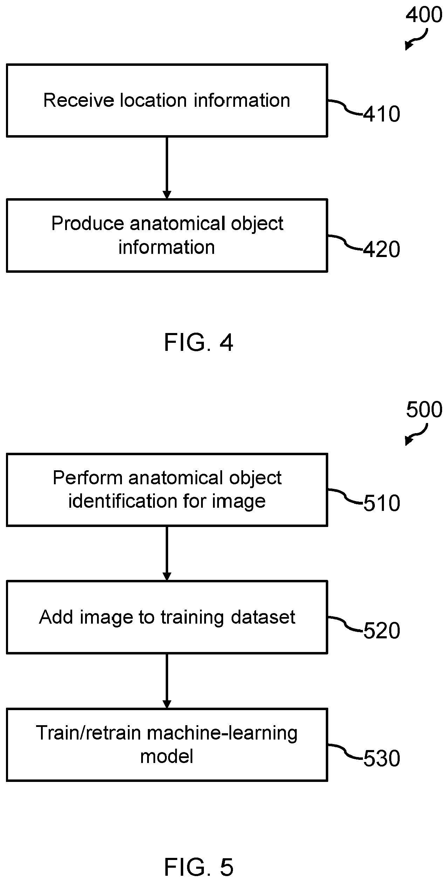

Fig. 4 illustrates a computer-implemented method 400 for performing anatomical object identification on a medical image, according to an embodiment of the invention.

The method 400 begins at step 410, at which location information identifying the location, with respect to the medical image, of one or more measurement locations is received. Each measurement location represents a location defined by a clinician during a geometric measurement procedure using the medical image.

In some examples, each measurement location may represent a location of a jaw of a virtual caliper used to determine a measurement of the anatomical object by the clinician during the geometric measurement procedure. The location of each measurement location may be manually defined by the clinician during the geometric measurement procedure.

As described above, the one or more measurement locations may comprise a first set of measurement locations that represent a first start location and a first end location for a measurement taken across a first dimension of the anatomical object; and a second set of measurement locations that represent a second start location and a second end location for a measurement taken across a second, different dimension of the anatomical object. The first dimension may be substantially perpendicular to the second dimension.

In some examples, step 410 comprises receiving a medical report associated with the medical image, the medical report comprising the location information. The medical report may comprise a structured medical report, and is preferably a DICOM encoded report. The medical report may further comprise measurement information identifying the measurements produced during the geometric measurement procedure.

At step 420, the location information is processed to produce anatomical object information that identifies a region containing and/or bounding the anatomical object. This step may comprise identifying, as the region, a contour or bounding box that intersects the location of each measurement location identified in the location information, or that contains the location of each measurement location.

As described above, one of a width or height of the region may be defined by the distance between the first start location and the first end location, and the other of the width or height of the region may be defined by the distance between the second start location and the second end location.

Fig. 5 illustrates a computer-implemented method 500 for performing anatomical object identification on medical images, according to an embodiment of the invention.

The method 500 begins at step 510, at which anatomical object identification is performed on each medical image using the method 400 described above. In some examples, the step of receiving location information may comprise receiving a medical report associated with the medical image that comprises the location information and measurement information identifying the measurements produced during the geometric measurement procedure.

In some examples, the method may further comprise a step 520, at which each medical image and anatomical object information are added to a training dataset for training a machine-learning model to perform anatomical object identification to produce an updated training dataset, and a step 530, at which the machine-learning model is subsequently trained or retrained using the updated training dataset.

It will be understood that the disclosed methods are computer-implemented methods. As such, there is also proposed a concept of a computer program comprising code for implementing any described method when said program is run on a processing system.

The skilled person would be readily capable of developing a processing system comprising an input interface, a data processor and an output interface for carrying out any herein described method. In particular, each step of the flow chart may represent a different action performed by a processing system, and may be performed by a relevant module of the processing system.

Embodiments make use of a data processor. The data processor can be implemented in numerous ways, with software and/or hardware, to perform the various functions required. A processor is one example of a data processor which employs one or more microprocessors that may be programmed using software (e.g., microcode) to perform the required functions. A data processor may however be implemented with or without employing a processor, and also may be implemented as a combination of dedicated hardware to perform some functions and a processor (e.g., one or more programmed microprocessors and associated circuitry) to perform other functions.

Examples of data processor components that may be employed in various embodiments of the present disclosure include, but are not limited to, conventional microprocessors, application specific integrated circuits (ASICs), and field-programmable gate arrays (FPGAs).

In various implementations, a processor or data processor may be associated with one or more storage media such as volatile and non-volatile computer memory such as RAM, PROM, EPROM, and EEPROM. The storage media may be encoded with one or more programs that, when executed on one or more processors and/or data processors, perform the required functions. Various storage media may be fixed within a processor or data processor or may be transportable, such that the one or more programs stored thereon can be loaded into a processor or data processor.

It will be understood that disclosed methods are preferably computer-implemented methods. As such, there is also proposed the concept of a computer program comprising code for implementing any described method when said program is run on a processing system, such as a computer. Thus, different portions, lines or blocks of code of a computer program according to an embodiment may be executed by a processing system or computer to perform any herein described method.

There is also proposed a non-transitory storage medium that stores or carries a computer program or computer code that, when executed by a processing system (e.g., having a data processor), causes the processing system to carry out any herein described method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. Measures recited in mutually different dependent claims may advantageously be combined. A computer program as discussed above may be stored/distributed on a suitable medium, such as an optical storage medium or a solid-state medium supplied together with or as part of other hardware, but it may also be distributed in other forms, such as via the Internet or other wired or wireless telecommunication systems. If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method (400) for performing anatomical object identification on a medical image, the computer-implemented method comprising:
receiving (410) location information identifying, with respect to the medical image, one or more measurement locations, wherein each measurement location represents a location defined by a clinician during a geometric measurement procedure using the medical image; and
processing the location information to produce (420) anatomical object information that identifies a region containing and/or bounding the anatomical object.

2. The computer-implemented method of claim 1, wherein:
the one or more measurement locations comprise two or more measurement endpoints; and
each measurement endpoint represents a start location or an end location of a measurement of an anatomical object taken by a clinician during a geometric measurement procedure using the medical image.

3. The computer-implemented method of claim 1 or 2, wherein the one or more measurement locations comprise:
a first set of measurement locations (X1, X2) that represent a first start location and a first end location for a geometric measurement taken across a first dimension of the anatomical object; and
a second set of measurement locations (Y1, Y2) that represent a second start location and a second end location for a geometric measurement taken across a second, different dimension of the anatomical object.

4. The computer-implemented method of claim 3, wherein the first dimension is substantially perpendicular to the second dimension.

5. The computer-implemented method of claim 3 or 4, wherein:
one of a width or height of the region is defined by the distance between the first start location and the first end location; and
the other of the width or height of the region is defined by the distance between the second start location and the second end location.

6. The computer-implemented method of any of claims 1 to 5, wherein the step of processing the location information comprises identifying, as the region, a contour or bounding box that intersects the location of each measurement location identified in the location information.

7. The computer-implemented method of any of claims 1 to 6, wherein each measurement location represents a location of a jaw of a virtual caliper used to determine a geometric measurement of the anatomical object by the clinician during the geometric measurement procedure.

8. The computer-implemented method of any of claims 1 to 7, wherein each measurement location is manually defined by the clinician during the geometric measurement procedure.

9. The computer-implemented method of any of claims 1 to 8, wherein the step of receiving location information comprises receiving a medical report associated with the medical image, the medical report comprising the location information.

10. The computer-implemented method of claim 8, wherein the medical report further comprises measurement information identifying the measurements produced during the geometric measurement procedure.

11. A computer-implemented method (500) of performing (510) anatomical object identification on medical images comprising, for each medical image, performing the method of any of claims 1 to 10.

12. The computer-implemented method of claim 11, further comprising:
producing a training dataset comprising the medical images and anatomical object information; and
training a machine-learning model to perform anatomical object identification using the training dataset.

13. The computer-implemented method of claim 12, further comprising:
adding (520) each medical image and anatomical object information to the training dataset to produce an updated training dataset; and
subsequently training or retraining (530) the machine-learning model using the updated training dataset.

14. A computer program product comprising computer program code which, when executed by a processor (110), causes the processor to perform the steps of the method according to any of claims 1 to 13.

15. A processing system (110) for performing anatomical object identification on a medical image, the processing system being configured to perform the steps of the method according to any of claims 1 to 13.
